# EUROPEAN PATENT APPLICATION

(11) **EP 4 571 150 A1**
(43) Date of publication of application: **18.06.2025**
(21) Application number: 23217201.5
(22) Date of filing: 15.12.2023
(51) Int. Cl.: F16J 9/16, F16J 9/20, F16J 9/24

(54) **PISTON RING ASSEMBLY**

(71) Applicant: MAHLE International GmbH, 70376 Stuttgart (DE)
(72) Inventor: Abreu, Joao, 3500-188 Viseu (PT); Dr. Avelar Araujo, Juliano, 3040-382 Coimbra (PT); Moreira, Rui, 4590-540 Pacos de Ferreira (PT); Pinto, Guilherme, 4730-721 Braga, Vila Verde (PT); Simoes, Marcelo, 3360-110 São Mamede, Penacova (PT)
(74) Representative: Grauel, Andreas

(57) **Abstract**

The invention relates to a piston ring assembly (10) comprising a first annular ring element (15) having a first gap and further comprising a second annular ring element (16) having a second gap, the first annular ring element (15) is located above the second annular ring element (16) contacting the second annular ring element (16) such that the first gap and the second gap are out of alignment, the first annular ring element (15) having a first radial outer face (17) having a first outer radius (R1) and the second ring element (16) having a second radial outer face (18) having a second outer radius (R2) such that the second outer radius (R2) is larger or the same than the first outer radius (R1).

## Description

### Technical field

The invention relates to a piston ring assembly, especially for an internal combustion engine designed to use carbon-neutral fuels. The invention further relates to a piston having a piston ring assembly and to an internal combustion engine having a piston with a piston ring assembly.

### Background of the invention

Internal combustion engines have at least one piston movable arranged in a cylinder such that the top surface of the piston defines a chamber used for the combustion. As a result of increasing environmental concerns regarding pollutant emissions from internal combustion engines using fossil fuels, several approaches are being studied to minimise their impact. Most of the current internal combustion engines have been optimized to work with fossil fuels like gasoline, natural gas, liquified-petroleum gas and diesel, therefore they are with great environmental impact. New developments are dedicated to carbon-neutral new fuels like hydrogen, whose combustion generates water vapor.

Using a new fuel often requires modifications on an internal combustion engine, so that operation of the internal combustion engine is secure, efficient and durable. Such is the case with hydrogen, which has different properties compared to the fossil fuels like mixture requirements, combustion temperatures and pressures. Two of the main concerns on operating hydrogen in an internal combustion engine are the flow of air/fuel mixture into the crankcase and the presence of lubricating oil inside the combustion chamber.

These conditions are also common with other fuels, as the way they occur are related to the overall geometry of components of the engine. However, these two concerns present bigger issues when the fuel is hydrogen, because hydrogen is flammable with much higher air/fuel concentrations than other fuels such that its presence inside the crankcase has the potential of igniting unexpectedly. Furthermore, oil in the combustion chamber will ignite together with the hydrogen and generate carbon-dioxide and particulate emissions. Additionally, oil vapours inside the combustion chamber change the air/fuel mixture, possibly creating a condition where the engine compression is sufficient to ignite the mixture before the timed spark.

Typically, a piston has multiple grooves for placing annular piston rings that also contact with the cylinder. These rings have a gap that serves a more easy assembly inside the piston groove and providing tension to the ring, so it stays in contact with the cylinder. Therefore, gas is able to flow through the gap. Such effect is called "blow by" having a negative impact on engine efficiency and leading to an unwanted presence of fuel inside the crankcase.

Document EP 3 889 471 A1 discloses a piston ring of an internal combustion engine for ships such that the engine speed is in the range of 200 RPM for a 2-stroke engine and 800 RPM for a 4-stroke engine and the inner diameter of the cylinder is at least 200 mm. The piston ring has a ring section and a lock section having a male locking end and a female locking end interacting with each other. Such piston ring design is not useable for internal combustion engines for automotive applications working at higher engine speeds up to 6000 RPM. Under high engine speed the lock section is not able to keep the female locking end locked to the male locking end and the piston ring will open the lock section allowing a blow-by and most likely damaging the lock section of the piston ring.

### Description of the invention, aim, solution, advantages

It is the aim of the invention to create a piston ring assembly which is improved compared to the prior of the art. It is also the aim to find a solution that minimises the blow-by and oil film presence inside the combustion chamber of an internal combustion engine improving efficiency of the internal combustion engine and allows a safe operation with hydrogen as fuel. It is furthermore the aim of the invention to create an improved piston and to create an improved internal combustion engine.

The aim concerning the piston ring assembly is solved with the features of claim 1.

One exemplary embodiment of the invention relates to a piston ring assembly comprising a first annular ring element having a first gap and further comprising a second annular ring element having a second gap, the first annular ring element is located above the second annular ring element contacting the second annular ring element such that the first gap and the second gap are out of alignment, the first annular ring element having a first outer face having a first outer radius and the second ring element having a second outer face having a second outer radius such that the second outer radius is larger or the same than the first outer radius. Such piston ring assembly covers the gaps of both annular ring elements by the respective other annular ring element and in case the radius of the two annular ring elements is different only one ring element gets in contact with the inner face of the cylinder reducing friction at the sliding contact to the inner face of the cylinder.

According to one embodiment of the invention it is of advantage that the first ring element and the second ring element are twisted at an angle such that the first gap is misaligned to the second gap, especially the first ring element is twisted at an angle of about 30° to 180° with regard to the second ring element, preferably twisted at an angle of about 90° to 180°. The twisting is applied around the axial direction such that the first ring element is turned around the axial direction with respect to the second ring element such that the first gap and the second gap are shifted from each other and are no longer aligned. In the case of an angle of 30° to 180° it is guaranteed that the both gaps are not aligned and they are far away from each other creating a kind of a labyrinth sealing between each other.

According to another embodiment of the invention it is of advantage that the second ring element having the second radial outer face, a second radial inner face, a second axial lower face and a second axial upper face, while the second axial upper face contacts the first annular ring element. With this design the second ring element serves as sealing within the cylinder and being a support for the first ring element which keeps the second ring element in place.

According to one embodiment of the invention it is of advantage that the second radial outer face is arranged at a right angle with respect to the second axial lower face and/or the second radial inner face is arranged at a right angle with respect to the second axial lower face and/or the second axial upper face is a sloping second axial upper face which is arranged at an angle smaller than 90° with respect to the second radial outer face and the second axial upper face is arranged at an angle larger than 90° with respect to the second radial inner face. The design having a sloping axial upper face leads to a self-centering effect between the first ring element and the second ring element.

According to one embodiment of the invention it is of advantage that the first ring element having the first radial outer face, a first radial inner face, a first axial lower face and a first axial upper face, while the first axial lower face contacts the second annular ring element. With this design the first ring element serves as support for the second ring element which keeps the second ring element in place.

Furthermore, it is of advantage that the first ring element also has a third radial outer face and a third axial lower face such that the third radial outer face contacts the second radial inner face and the third axial lower face is at the level of the second axial lower face. This design leads to a stable arrangement of the first ring element within a groove of a piston and a stable support of the second ring element.

Furthermore, it is of advantage that the first radial outer face is arranged at a right angle with respect to the first axial upper face and/or the first radial inner face is arranged at a right angle with respect to the first axial upper face and/or the first axial lower face is a sloping first axial lower face which is arranged at an angle larger than 90° with respect to the first radial outer face and/or the first axial lower face is arranged at an angle smaller than 90° with respect to the first radial inner face and/or the first axial lower face is arranged at an angle larger than 90° with respect to the third radial outer face and/or the third radial outer face is arranged at a right angle with respect to the third axial lower face. The design having a sloping axial lower face leads to a self-centering effect between the first ring element and the second ring element.

According to one embodiment of the invention it is of advantage that one of the first annular ring element and the second annular ring element has at least one protrusion and the other of the first annular ring element and the second annular ring element has at least one recess such that the protrusion protrudes into the recess to lock the first annular ring element to the second annular ring element. This design realises a form locking connection between the first ring element and the second ring element to prevent turning of one the ring element relative to other ring element not bringing the two gaps of the two ring elements unintentionally in alignment.

The aim concerning the piston is solved with the features of claim 9.

One exemplary embodiment of the invention relates to a piston of an internal combustion engine having an almost cylindrical piston body having at least on circumferential groove on the radial outer surface of the piston body and at least one piston ring assembly being arranged in at least one of the grooves whereas the piston ring assembly resembling features according to the inventive piston ring assembly.

The aim concerning the internal combustion engine is solved with the features of claim 10.

One exemplary embodiment of the invention relates to an internal combustion engine having at least one inventive piston.

Further advantageous designs are described by the following description of the figures and by the dependent claims.

### Short description of the drawing figures

In the following, the invention will be further explained based on several example embodiments using the drawing figures.

In the figures:
- Fig. 1: is a perspective representation of a piston of an internal combustion engine having piston rings arranged according to the prior art to explain the background of the inventive piston ring assembly,
- Fig. 2: is a sectional representation of a piston ring assembly according to an embodiment of the invention,
- Fig. 3: is a perspective representation of the piston ring assembly according to Fig. 2, and
- Fig. 4: is a sectional view of the piston ring assembly according to the embodiment of the invention arranged in a groove of a piston.

### Preferred embodiment of the invention

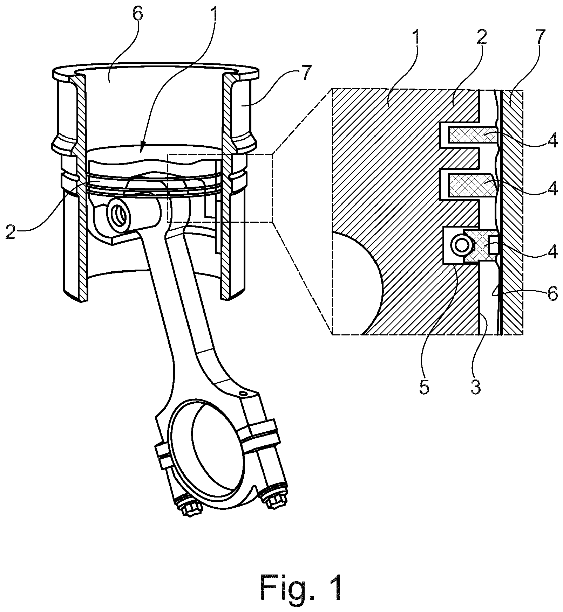

Figure 1 shows a piston 1 according to the prior art having a piston body 2 having a radial outer face 3 in which grooves 5 are provided at different axial positions. In the grooves 5 piston rings 4 are arranged to touch the inner face 6 of the cylinder 7 in which the piston 1 is arranged. Such piston rings 4 have typically a gap for better assembling of the piston ring 4 within the groove 5 which causes unwanted blow-by and oil leakage.

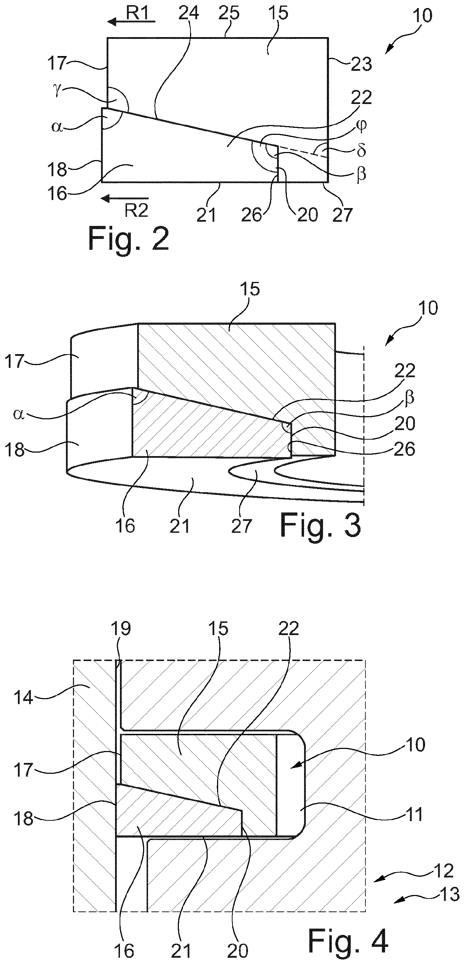

Figures 2 to 4 show different representations of a piston ring assembly 10 according to an embodiment of the invention for being arranged in a groove 11 of a piston 12 of an internal combustion engine 13, see Fig. 4. The piston 12 is arranged in a cylinder 14 of the internal combustion engine 13 for a reciprocating movement of the piston12 within the cylinder 14.

The inventive piston ring assembly 10 shall prevent or minimise the blow-by of gases and leakage of oil compared to a standard piston ring 4 having an open gap.

The piston ring assembly 10 according to the embodiment of the invention comprises a first annular ring element 15 and a second annular ring element 16.

The first annular ring element 15 has a first gap and is made as an open ring element 15. The second annular ring element 16 comprises a second gap and is made as an open ring element 16 too. The existence of the gap in the respective annular ring element 15, 16 supports the application of the ring element in a groove 11 of a piston 12.

As can be seen in the Figures 2 to 4, the first annular ring element 15 is located above the second annular ring element 16 contacting the second annular ring element 16 such that the first gap and the second gap are out of alignment. This arrangement leads to a blocking of a gap of an ring element 15, 16 by the respective other ring element 16, 15.

Furthermore, the first annular ring element 15 has a first radial outer face 17 having a first outer radius R1 and the second ring element 16 has a second radial outer face 18 having a second outer radius R2 such that the second outer radius R2 is larger or the same than the first outer radius R1. This leads to the fact, that in case R2 is larger than R1 only the second ring element 16 gets into contact with the inner face 19 of the cylinder 14 and the first ring element 15 stays away from the inner face 19 of the cylinder 14.

In order to keep the gaps of the two ring elements 15, 16 away from each other the first ring element 15 and the second ring element 16 are arranged in that way that they are twisted at an angle such that the first gap is misaligned to the second gap, especially the first ring element 15 is twisted at an angle of about 30° to 180° with regard to the second ring element 16, preferably twisted at an angle of about 90° to 180°. This leads to a stable blocking of the two respective gaps of the two respective annular ring elements 15, 16 by the respective other annular ring element 16, 15.

As can be seen from the Figures, the second annular ring element 16 having the second radial outer face 18, furthermore has a second radial inner face 20, a second axial lower face 21 and a second axial upper face 22. The second annular ring element 16 is arranged such that the second axial upper face 22 contacts the first annular ring element 15.

Furthermore, the second radial outer face 18 is arranged at a right angle with respect to the second axial lower face 21 and the second radial inner face 20 is arranged at a right angle with respect to the second axial lower face 21 and the second axial upper face 22 is a sloping second axial upper face 22 which is arranged at an angle α smaller than 90° with respect to the second radial outer face 18 and the second axial upper face 22 is arranged at an angle β larger than 90° with respect to the second radial inner face 20. This leads to a sloping face 22 at the circumference of the second annular ring element 16.

The first annular ring element 15 is designed such that it has the first radial outer face 17, a first radial inner face 23, a first axial lower face 24 and a first axial upper face 25. The first axial lower face 24 contacts the second annular ring element 16 at the second axial upper face 22.

Furthermore, the first annular ring element 15 has a third radial outer face 26 and a third axial lower face 27 such that the third radial outer face 26 contacts the second radial inner face 20 and the third axial lower face 27 is at the level of the second axial lower face 21 or above of that. This may lead to the fact, that the first annular ring element 15 is supported by the second annular ring element 16 and not supported by the groove 11 of the piston 12.

Furthermore, the first radial outer face 17 is arranged at a right angle with respect to the first axial upper face 25 and the first radial inner face 23 is arranged at a right angle with respect to the first axial upper face 25 and the first axial lower face 24 is a sloping first axial lower face 24 which is arranged at an angle γ larger than 90° with respect to the first radial outer face 17 and the first axial lower face 24 is arranged at an angle δ smaller than 90° with respect to the first radial inner face 23 and the first axial lower face 24 is arranged at an angle φ larger than 90° with respect to the third radial outer face 26 and the third radial outer face 26 is arranged at a right angle with respect to the third axial lower face 27.

In order to lock the two annular ring elements 15, 16 to each other it is possible to design them such that one of the first annular ring element 15 and the second annular ring element 16 has at least one protrusion and the other of the first annular ring element 15 and the second annular ring element 16 has at least one recess such that the protrusion protrudes into the recess to lock the first annular ring element 15 to the second annular ring element 16 in circumferential direction and/or in radial direction.

The inventive piston ring assembly 10 for an internal combustion engine 13 therefore comprises two annular tensionable ring elements 15, 16 with respective gaps angularly spaced apart such that each annular ring element 15, 16 blocks the gap of the respective other annular ring element 16, 15.

The lower annular ring element 16 creates most of the gas sealing effect of the piston ring assembly 10, as its outer annular radial surface 18 is in contact with the cylinder 14, except in the gap region but this gap is blocked by the other annular ring element 15. The upper annular ring element 15 also has a gap which is blocked by the lower annular ring element 16.

The sloping contact face between the upper annular ring element 15 and the lower annular ring element 16 improves tension transmission between the ring elements 15, 16 and creates a downward force component, thus pushing the piston ring assembly 10 towards the bottom section of the groove 11 of the piston 12, therefore ring fluttering inside the piston groove is reduced compared to a design where the contact face is perpendicular to the ring axis and a traditional piston ring 4 with only one component.

The intersection of the two sloping faces of the annular ring elements 15, 16 may have an undercut to ease manufacturing of the annular ring elements 15, 16 without negative impacts on the ring assembly performance. In the sloping surfaces of the annular ring elements 15, 16, there might be at least one additional bulge or protrusion and at least one recess interface to improve sealing capabilities of the assembly by restricting gas from flowing between the rings.

According to an embodiment of the invention both annular piston ring elements 15, 16 have a tangential force with a magnitude between 5 and 25 Newton and the top annular ring element 15 has higher tangential force than the lower annular ring element 16.

The size and weight of the annular ring elements 15, 16 might be such that the upper annular ring element 15 has a mass of 1.1 to 2.8 times the lower annular ring element 16. The lower annular ring element 16 has a smaller radial thickness and height dimensions compared to the upper annular ring element 15.

The piston ring assembly 10 might be manufactured such that at least a nitriding surface treatment is applied to at least one of the annular ring elements 15, 16 or to both annular ring elements 15, 16.

Furthermore, it might be of advantage that at least one of the faces of one of the annular ring elements 15, 16 or of the two annular ring elements 15, 16 comprise a coating applied by the PVD (Physical Vapor Deposition) process generated by a source of cathodic arc. Alternatively, other coatings are possible too.

The coating might have a preferred thickness between 10µm and 60µm.

The annular ring elements 15, 16 might be from the same material or from different materials. A base material of the annular ring elements 15, 16 is made of steel having 10 to 17% chromium, carbon steel or cast iron. The base material might be made of nitrided cast iron.

The piston ring assembly 10 might be manufactured by coiling a wire, if the base material is made of carbon steel or steel having 10% to 17% chromium or by turning, if the base material is cast iron. After coiling or turning, both annular ring elements 15, 16 might be grinded and machined on the lateral, external and internal faces.

In case the annular ring elements 15, 16 may have protrusions and/or recesses a method of manufacturing the protrusions and the recesses is: coiling a wire with the protrusion or the recess geometry included in its cross-section and grinding or machining the protrusions or the recesses.

Preferably a used steel base material is gas nitrided at a temperature of 400°C to 700°C, the nitride layer thickness is between 6µm to 150µm.

Furthermore, the two-piece piston ring assembly 10 might be manufactured such that at least one face comprises a PVD coating with deposition at a temperature between 300°C and 700°C and has a coating thickness about 10µm to 60µm.

## Claims

1. A piston ring assembly (10) comprising a first annular ring element (15) having a first gap and further comprising a second annular ring element (16) having a second gap, the first annular ring element (15) is located above the second annular ring element (16) contacting the second annular ring element (16) such that the first gap and the second gap are out of alignment, the first annular ring element (15) having a first radial outer face (17) having a first outer radius (R1) and the second ring element (16) having a second radial outer face (18) having a second outer radius (R2) such that the second outer radius (R2) is larger or the same than the first outer radius (R1).

2. The piston ring assembly (10) according to claim 1, **characterised in that** the first ring element (15) and the second ring element (16) are twisted at an angle such that the first gap is misaligned to the second gap, especially the first ring element (15) is twisted at an angle of about 30° to 180° with regard to the second ring element (16), preferably twisted at an angle of about 90° to 180°.

3. The piston ring assembly (10) according to claims 1 or 2, **characterised in that** the second ring element (16) having the second radial outer face (18), a second radial inner face (20), a second axial lower face (21) and a second axial upper face (22), while the second axial upper face (22) contacts the first annular ring element (15).

4. The piston ring assembly (10) according to claim 3, **characterised in that** the second radial outer face (18) is arranged at a right angle with respect to the second axial lower face (21) and/or the second radial inner face (20) is arranged at a right angle with respect to the second axial lower face (21) and/or the second axial upper face (22) is a sloping second axial upper face (22) which is arranged at an angle smaller than 90° with respect to the second radial outer face (18) and the second axial upper face (22) is arranged at an angle larger than 90° with respect to the second radial inner face (20).

5. The piston ring assembly (10) according to claims 1, 2, 3 or 4, **characterised in that** the first ring element (15) having the first radial outer face (17), a first radial inner face (23), a first axial lower face (24) and a first axial upper face (25), while the first axial lower face (24) contacts the second annular ring element (16).

6. The piston ring assembly (10) according to claim 5, **characterised in that** the first ring element (15) furthermore having a third radial outer face (26) and a third axial lower face (27) such that the third radial outer face (26) contacts the second radial inner face (20) and the third axial lower face (27) is at the level of the second axial lower face (21) or above of that.

7. The piston ring assembly (10) according to one of the preceding claims, **characterised in that** the first radial outer face (17) is arranged at a right angle with respect to the first axial upper face (25) and/or the first radial inner face (23) is arranged at a right angle with respect to the first axial upper face (25) and/or the first axial lower face (24) is a sloping first axial lower face (24) which is arranged at an angle larger than 90° with respect to the first radial outer face (17) and/or the first axial lower face (24) is arranged at an angle smaller than 90° with respect to the first radial inner face (23) and/or the first axial lower face (24) is arranged at an angle larger than 90° with respect to the third radial outer face (26) and/or the third radial outer face (26) is arranged at a right angle with respect to the third axial lower face (27).

8. The piston ring assembly (10) according to one of the preceding claims, **characterised in that** one of the first annular ring element (15) and the second annular ring element (16) has at least one protrusion and the other of the first annular ring element (15) and the second annular ring element (16) has at least one recess such that the protrusion protrudes into the recess to lock the first annular ring element (15) to the second annular ring element (16).

9. A piston (12) of an internal combustion engine (13) having a piston body (2) having at least on circumferential groove (11) and at least one piston ring assembly (10) arranged in at least one of the grooves (11) **characterised in that** the piston ring assembly (10) having the features according to at least one of the preceding claims.

10. An internal combustion engine (13) having at least one piston (12) according to claim 9.
